# EUROPEAN PATENT APPLICATION

(11) **EP 3 808 548 A1**
(43) Date of publication of application: **21.04.2021**
(21) Application number: 20156311.1
(22) Date of filing: 10.02.2020
(51) Int. Cl.: B29C 70/88, B29C 70/20, F16B 5/02, B29C 70/30, B29L 31/00

(54) **COMPOSITE MATERIAL AND BOLTFASTENED STRUCTURE**

(30) Priority: 17.10.2019 JP 2019190119
(71) Applicant: Mitsubishi Heavy Industries, Ltd., Chiyoda-ku Tokyo 100-8332 (JP)
(72) Inventor: HASHIZUME, Ryosuke, Tokyo, 100-8332 (JP)
(74) Representative: Henkel & Partner mbB

(57) **Abstract**

A reinforcing fiber bundle (13) containing composite material includes:

a composite material (10) which is formed by laminating a plurality of fiber reinforced resin sheets (14a) and has a bolt hole (15) passing through the composite material (10) in a thickness direction;
and a fiber bundle (13) which is provided inside at least one of the fiber reinforced resin sheets (14a) separated from each other in the thickness direction, the fiber reinforced resin sheets (14a) respectively having surfaces of the composite material (10) disposed in the thickness direction, wherein the fiber bundle (13) is oriented in a circumferential direction of the bolt hole (15).

## Description

### BACKGROUND OF THE INVENTION

### Field of the Invention

The present disclosure relates to a reinforcing fiber bundle containing composite material and a bolt-fastened structure.

### Description of Related Art

In a moving object such as an airplane or a building structure, composite materials each formed by laminating a plurality of fiber reinforced resin sheets and provided with bolt holes are connected to each other by using a bolt, a nut, and a composite material joint.

Japanese Unexamined Patent Application, First Publication No. H04-366621 discloses a composite material joint which is manufactured by preparing large and small molded circumferential and pillar fiber bundles, laminating these fiber bundles in a shape of a final product or a shape similar to a final product, and integrating and curing the same.

### SUMMARY OF THE INVENTION

Incidentally, since the surrounding of the bolt hole of the composite material with the above-described configuration has a low strength, there is a possibility that the surrounding of the bolt hole may be damaged due to a load applied to a fastening portion after the composite materials are fastened by using a bolt and a nut.

The present disclosure has been made to solve the above-described problems and an object of the present disclosure is to provide a reinforcing fiber bundle containing composite material and a bolt-fastened structure capable of improving strength in the surrounding of a bolt hole.

In order to solve the above-described problems, a reinforcing fiber bundle containing composite material according to the present disclosure includes: a composite material which is formed by laminating a plurality of fiber reinforced resin sheets and has a bolt hole passing through the composite material in a thickness direction thereof; and a fiber bundle which is provided inside at least one of the fiber reinforced resin sheets separated from each other in the thickness direction, the fiber reinforced resin sheets respectively having surfaces of the composite material disposed in the thickness direction, wherein the fiber bundle includes a first portion which is oriented in a circumferential direction of the bolt hole and has two ends, and a second portion which has a first end connected to at least one end of these two ends and is formed in a linear shape.

According to the reinforcing fiber bundle containing composite material and the bolt-fastened structure of the present disclosure, it is possible to improve the strength in the surrounding of the bolt hole of the composite material.

### BRIEF DESCRIPTION OF THE DRAWINGS

FIG. 1 is a side view of a reinforcing fiber bundle containing composite material according to a first embodiment of the present disclosure.
FIG. 2 is a plan view in which a part corresponding to a region A is viewed from B in the reinforcing fiber bundle containing composite material shown in FIG. 1.
FIG. 3 is a side view of a bolt-fastened structure according to the first embodiment of the present disclosure.
FIG. 4 is a plan view in which the bolt-fastened structure shown in FIG. 3 is viewed from C.
FIG. 5 is a cross-sectional view taken along a line D₁-D₂ of the bolt-fastened structure shown in FIG. 4.
FIG. 6 is a cross-sectional view schematically showing a bolt-fastened structure in a state in which a load F1 is applied to an end of a bolt hole through a shaft portion of a bolt.
FIG. 7 is a cross-sectional view of a reinforcing fiber bundle containing composite material according to a modified example of the first embodiment of the present disclosure.
FIG. 8 is a cross-sectional view of a bolt-fastened structure according to a modified example of the first embodiment of the present disclosure.
FIG. 9 is a cross-sectional view of a bolt-fastened structure according to a second embodiment of the present disclosure.
FIG. 10 is an enlarged cross-sectional view of a main part of a reinforcing fiber bundle containing composite material according to a third embodiment of the present disclosure.
FIG. 11 is an enlarged plan view of a main part of a reinforcing fiber bundle containing composite material according to a fourth embodiment of the present disclosure.

### DETAILED DESCRIPTION OF THE INVENTION

### <First embodiment>

### (Overall configuration of reinforcing fiber bundle containing composite material)

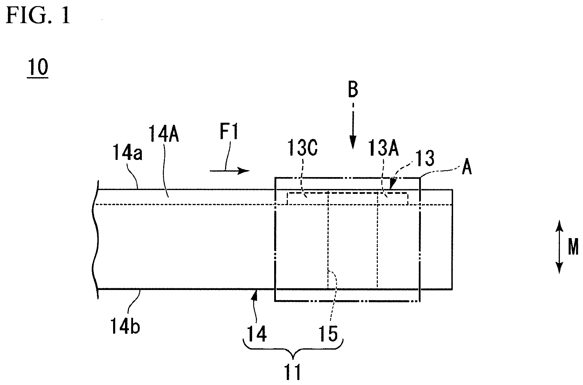

Referring to FIGS. 1 to 6, a reinforcing fiber bundle containing composite material 10 and a bolt-fastened structure 30 according to a first embodiment will be described. In FIGS. 1, 2, and 6, F1 indicates a load applied to an end of a bolt hole 15 and a load (hereinafter, referred to as a "load F1") exerted in a direction opposite to the load applied to the composite material 10.

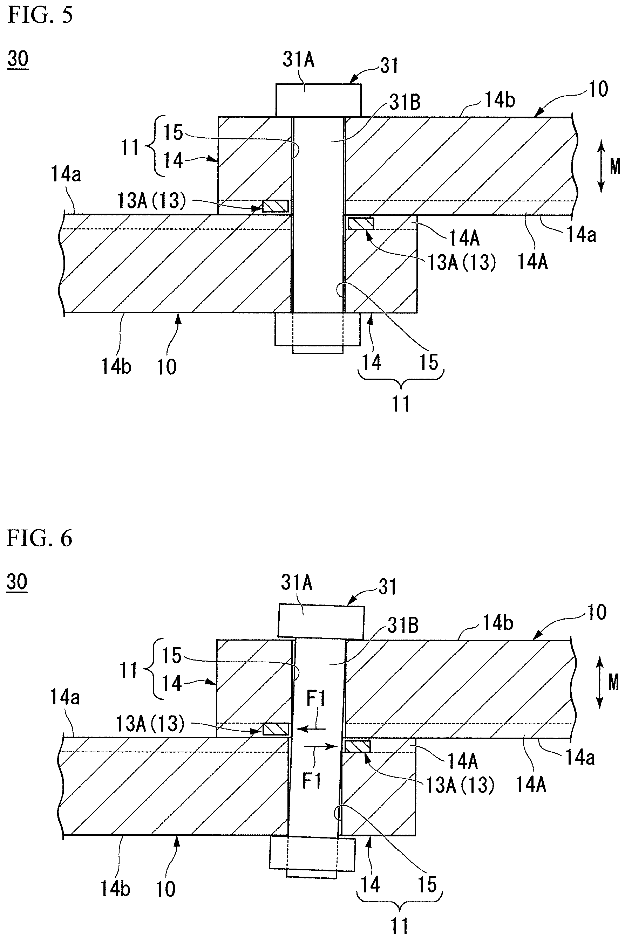

In FIGS. 1 to 6, the same reference numerals will be given to the same components. Additionally, FIGS. 5 and 6 schematically show a first portion 13A of a fiber bundle 13.

The reinforcing fiber bundle containing composite material 10 includes a composite material 11 and a plurality of the fiber bundles 13.

### (Configuration of composite material)

The composite material 11 includes a composite material body 14 and a bolt hole 15.

The composite material body 14 is formed by laminating a plurality of fiber reinforced resin sheets and curing the resin. The shape of the composite material body 14 can have, for example, a plate shape. The composite material body 14 includes surfaces 14a and 14b (both surfaces of the composite material 11) disposed in a thickness direction M of the composite material body 14 (a lamination direction of a plurality of fiber reinforced resin sheets).

The plurality of fiber reinforced resin sheets include a fiber reinforced resin sheet 14A forming the surface 14a.

The bolt hole 15 is formed so as to pass through the composite material body 14 in the thickness direction M. A shaft portion 31B of a bolt 31 to be described later is disposed in the bolt hole 15.

### (Configuration of fiber bundles)

The fiber bundle 13 is provided inside the fiber reinforced resin sheet 14A. The fiber bundle 13 has a U shape as viewed from the thickness direction M. The fiber bundle 13 includes a first portion 13A which follows the circumferential direction of the bolt hole 15 and second portions 13B and 13C which are integrally formed with the end of the first portion 13A.

The first portion 13A is formed in a C shape and is oriented in the circumferential direction of the bolt hole 15. The first portion 13A includes one end 13AA and the other end 13AB as the both ends thereof.

The second portion 13B has a linear shape and includes a first end 13BA and a second end 13BB. The first end 13BA is connected to one end 13AA of the first portion 13A. The second portion 13C has a linear shape and includes a first end 13CA and a second end 13CB. The first end 13CA is connected to the other end 13AB of the first portion 13A.

The plurality of fiber bundles 13 are disposed at intervals in a direction in which the load F1 is applied. The plurality of fiber bundles 13 are formed so as to increase in length as it goes away from the bolt hole 15.

As the fiber forming the fiber bundle 13, for example, carbon fiber or aramid fiber can be used.

When carbon fiber or aramid fiber is used as the fiber bundle 13, for example, an epoxy resin or a PEEK resin can be used as the material of the fiber reinforced resin sheet 14A.

A structure formed by the fiber reinforced resin sheet 14A and the plurality of fiber bundles 13 is desirably manufactured by, for example, an AFP (Automated Fiber Placement) method or a 3D printer.

### (Operations and effects of reinforcing fiber bundle containing composite material)

When the fiber bundle 13 having the above-described configuration is provided inside the fiber reinforced resin sheet 14A forming the surface 14a of the composite material 11, a load transmitted through the bolt 31 disposed in the bolt hole 15 can be received by the first portion 13A and the load received by the first portion 13A can be released through the second portions 13B and 13C.

In this way, when the load received by the surrounding of the bolt hole 15 is released, the surrounding of the bolt hole 15 having a low strength can be reinforced.

Additionally, the fiber reinforced resin sheet 14A having the fiber bundle 13 provided therein may be adhered to, for example, a surface of a lamination structure obtained by laminating the plurality of fiber reinforced resin sheets without the fiber bundle 13.

In this case, the outer shape of the fiber reinforced resin sheet 14A is not limited to the rectangular shape. For example, the shape of the fiber reinforced resin sheet 14A may be a U shape which follows the shape of the plurality of fiber bundles 13.

### (Operations and effects of forming U-shaped fiber bundle)

As described above, when the shape of the fiber bundle 13 is a U shape as viewed from the thickness direction M and the fiber bundle 13 is disposed so that the inner portions of the first portions 13A face a direction in which the load F1 received by an opening edge of the bolt hole 15 acts, the load transmitted by bending to the first portion 13A can be converted into the tension in a direction toward the second ends 13BB and 13CB of the second portions 13B and 13C and then be released.

Accordingly, it is possible to suppress a portion surrounded by the first portion 13A in the bolt hole 15 from being damaged by the load F1.

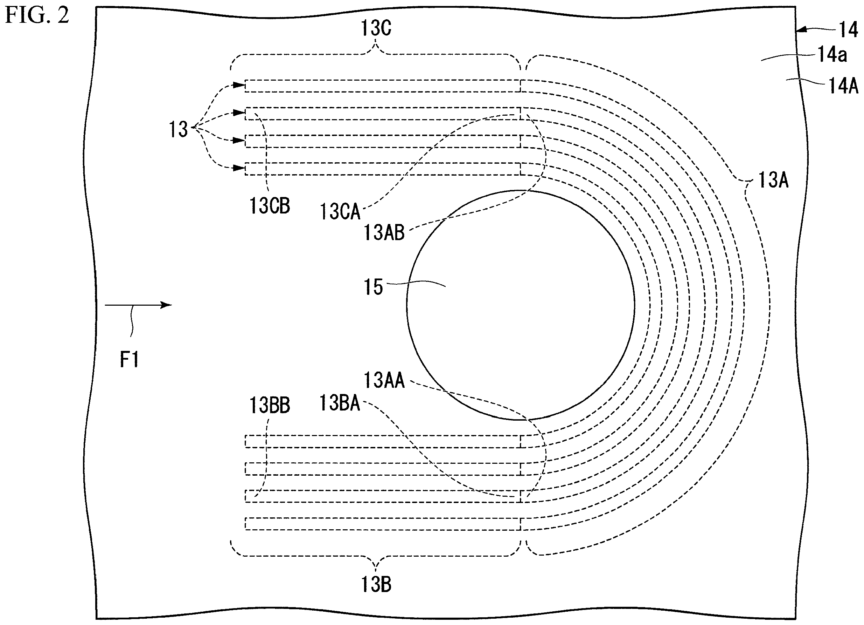

Thus, as shown in FIGS. 1 and 2, when a direction in which the load F1 acts is known in advance, the plurality of fiber bundles 13 may be disposed so that the inner portion of the first portion 13A faces in the direction in which the load F1 acts.

### (Overall configuration of bolt-fastened structure)

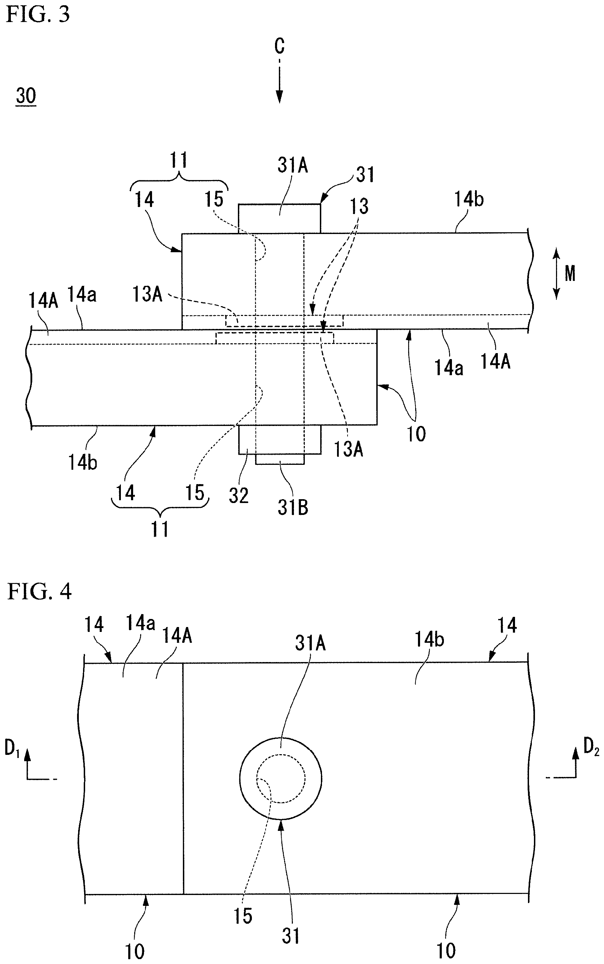

As shown in FIGS. 3 to 6, the bolt-fastened structure 30 of the first embodiment includes the reinforcing fiber bundle containing composite material 10 which is a first reinforcing fiber bundle containing composite material, the reinforcing fiber bundle containing composite material 10 which is a second reinforcing fiber bundle containing composite material, the bolt 31, and a nut 32.

That is, the bolt-fastened structure 30 includes two reinforcing fiber bundle containing composite materials 10.

Two reinforcing fiber bundle containing composite materials 10 are stacked so that the opening sides of the first portions 13A in which the fiber bundles 13 have a C shape as viewed from the thickness direction M face each other in a state in which the bolt holes 15 are aligned with each other in the thickness direction M and the fiber reinforced resin sheets 14A forming two reinforcing fiber bundle containing composite materials 10 contact each other.

The bolt 31 includes a head portion 31A and a shaft portion 31B. The head portion 31A conies into contact with a surface 14b of the composite material body 14 constituting the reinforcing fiber bundle containing composite material 10 disposed at the upper side in two reinforcing fiber bundle containing composite materials 10 in a stacked state.

The shaft portion 31B extends downward from the lower surface of the head portion 31A. The shaft portion 31B is disposed so as to pass through the bolt hole 15 formed in two composite material bodies 14 in a stacked state. The lower end portion of the shaft portion 31B protrudes downward in relation to the surface 14b of the composite material body 14 disposed at the lower side in two reinforcing fiber bundle containing composite materials 10. The surrounding of the intermediate portion of the shaft portion 31B is surrounded by the first portion 13A of the fiber bundle 13 provided in two reinforcing fiber bundle containing composite materials 10.

The nut 32 is attached to the lower end portion of the shaft portion 31B. The nut 32 contacts the surface 14b of the composite material body 14 disposed at the lower side in two composite material bodies 14.

In this way, two reinforcing fiber bundle containing composite materials 10 are fastened by the bolt 31 and the nut 32.

### (Operations and effects of bolt-fastened structure)

As shown in FIG. 5, when the bolt-fastened structure 30 does not receive a load, the shaft portion 31B of the bolt 31 is not inclined with respect to the surfaces 14a and 14b of the composite material body 14.

Meanwhile, as shown in FIG. 6, when a load is applied in a direction in which the shaft portion 31B of the bolt 31 is inclined, the opening edge of the bolt hole 15 receives the load F1.

With such a configuration, since the load F1 applied to the opening edge of the bolt hole 15 on the side of the surface 14a on the contact side of the reinforcing fiber bundle containing composite material 10 is also received by the first portion 13A of the fiber bundle 13, the load can be released by the fiber bundle 13.

Thus, since it is possible to suppress the opening edge of the bolt hole 15 from receiving a large load through the shaft portion 31B of the bolt 31, it is possible to suppress the opening edge of the bolt hole 15 from being damaged.

### <Modified example of first embodiment >

### (Configuration of reinforcing fiber bundle containing composite material)

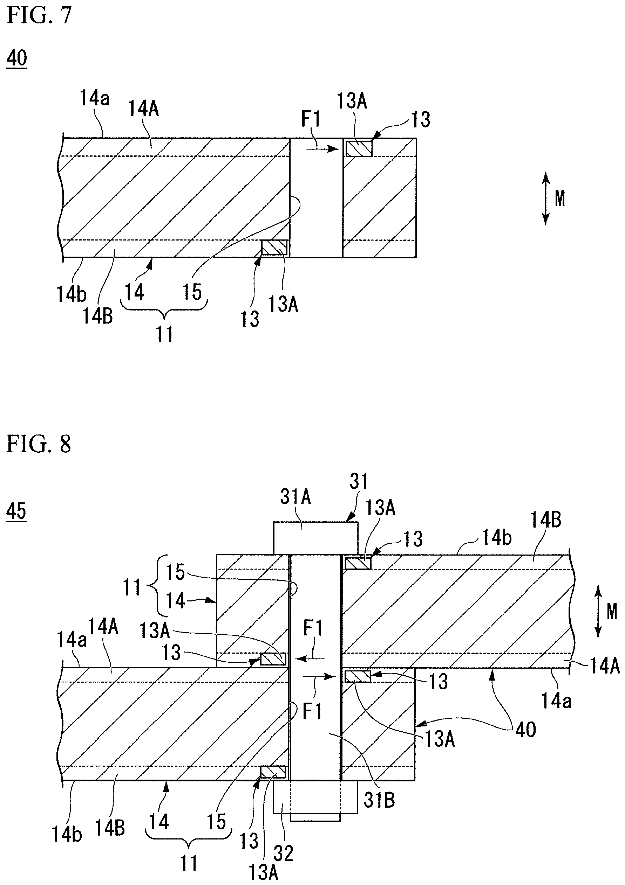

Referring to FIG. 7, a reinforcing fiber bundle containing composite material 40 according to a modified example of the first embodiment will be described. In FIG. 7, the same reference numerals will be given to the same components as those of the structure shown in FIG. 1.

The reinforcing fiber bundle containing composite material 40 has the same configuration as the reinforcing fiber bundle containing composite material 30 of the first embodiment except that the fiber bundle 13 is also provided on the side of the surface 14b.

That is, in the reinforcing fiber bundle containing composite material 40, the plurality of fiber bundles 13 are also provided in a fiber reinforced resin sheet 14B forming the surface 14b of the composite material body 14.

When viewed from the thickness direction M, the inner portion of the first portion 13A of the plurality of fiber bundles 13 provided in the fiber reinforced resin sheet 14B faces the inner portion of the first portion 13A of the plurality of fiber bundles 13 provided in the fiber reinforced resin sheet 14A in the direction F1.

### (Operations and effects of reinforcing fiber bundle containing composite material)

As described above, since the plurality of fiber bundles 13 are provided not only in the fiber reinforced resin sheet 14A forming the surface 14a of the composite material body 14 but also in the fiber reinforced resin sheet 14B forming the surface 14b of the composite material body 14 and are disposed so that the inner portions of the first portions 13A of two fiber bundles 13 face each other as viewed from the thickness direction, not only the surrounding of the bolt hole 15 located near the surface 14a but also the surrounding of the bolt hole 15 located near the surface 14b can be reinforced.

### (Configuration of bolt-fastened structure)

Referring to FIG. 8, a bolt-fastened structure 45 according to a modified example of the first embodiment will be described. In FIG. 8, the same reference numerals will be given to the same components as those of the structure shown in FIGS. 3 and 7.

The bolt-fastened structure 45 has the same configuration as the bolt-fastened structure 30 except that two reinforcing fiber bundle containing composite materials 40 which are the first and second reinforcing fiber bundle containing composite materials are provided instead of two reinforcing fiber bundle containing composite materials 10 constituting the bolt-fastened structure 30 of the first embodiment.

### (Operations and effects of bolt-fastened structure)

In the bolt-fastened structure 45, the plurality of fiber bundles 13 are disposed not only in the surrounding of the intermediate portion of the shaft portion 31B of the bolt 31 but also the surrounding of the upper end and the lower end of the shaft portion 31B and are disposed so that the inner portion of the first portion 13A of the plurality of fiber bundles 13 provided in the surface 14a and the inner portion of the first portion 13A of the plurality of fiber bundles 13 provided in the surface 14b face each other.

Thus, when the bolt-fastened structure 45 receives a load, the load is applied in a direction in which the shaft portion 31B of the bolt 31 is inclined and hence the opening edge of the bolt hole 15 on the side of the surface 14b receives the load in a direction opposite to the load applied to the opening edge of the bolt hole 15 on the side of the surface 14a in the direction F1. At this time, since the upper end and the lower end of the shaft portion 31B are received by the first portion 13A of the fiber bundle 13 provided on the side of the surface 14b of the composite material body 14, the load received by the opening edge of the bolt hole 15 can be released. Accordingly, it is possible to suppress the surrounding of the bolt hole 15 located on the side of the surface 14b from being damaged.

Additionally, in the first embodiment, a case in which two reinforcing fiber bundle containing composite materials 10 or two reinforcing fiber bundle containing composite materials 40 are used as the first and second reinforcing fiber bundle containing composite materials (the reinforcing fiber bundle containing composite materials having the same structure are used) has been described as an example, but reinforcing fiber bundle containing composite materials having different structures may be used as the first and second reinforcing fiber bundle containing composite materials.

Further, even when the fiber reinforced resin sheets 14A and 14B having the plurality of fiber bundles 13 provided therein are deteriorated or damaged due to long-term use, it is possible to obtain original strength by replacing the fiber reinforced resin sheets 14A and 14B having the plurality of fiber bundles 13 provided therein with a new one. Further, when the fiber reinforced resin sheets 14A and 14B are adhered to the composite material body without the fiber reinforced resin sheets 14A and 14B, it is possible to improve the strength in the surrounding of the bolt hole 15.

### <Second embodiment>

### (Overall configuration of bolt-fastened structure)

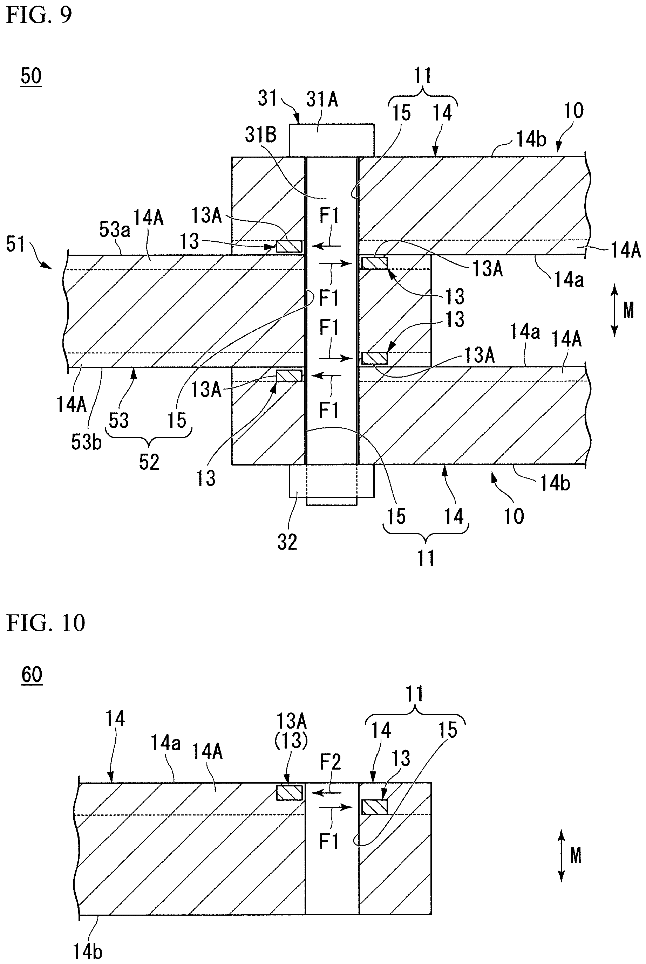

Referring to FIG. 9, a bolt-fastened structure 50 according to a second embodiment will be described. In FIG. 9, the same reference numerals will be given to the same components as those of the structure shown in FIG. 3.

The bolt-fastened structure 50 has the same configuration as the bolt-fastened structure 30 except that a reinforcing fiber bundle containing composite material 51 which is a third reinforcing fiber bundle containing composite material is further provided in addition to the configuration of the bolt-fastened structure 30 of the first embodiment and the reinforcing fiber bundle containing composite material 10 disposed at the lower side in two reinforcing fiber bundle containing composite materials 10 (the first and second reinforcing fiber bundle containing composite materials) is rotated by 180° in the horizontal direction so that the reinforcing fiber bundle containing composite material 51 is disposed between two reinforcing fiber bundle containing composite materials 10 in the thickness direction M.

### (Configuration of third reinforcing fiber bundle containing composite material)

The reinforcing fiber bundle containing composite material 51 has the same configuration as the reinforcing fiber bundle containing composite material 10 except that a composite material 52 is provided instead of the composite material 11 constituting the reinforcing fiber bundle containing composite material 10.

The composite material 52 has the same configuration as the composite material 11 except that the fiber reinforced resin sheet 14A having the plurality of fiber bundles 13 provided therein is provided on the side of each of the surface 53a and the surface 53b (a surface opposite to the surface 53a).

The first portion 13A of the plurality of fiber bundles 13 provided inside the fiber reinforced resin sheet 14A surrounds the surrounding of the shaft portion 31 B of the bolt 31 along with the first portion 13A of the plurality of fiber bundles 13 constituting the reinforcing fiber bundle containing composite material 10.

### (Operations and effects of bolt-fastened structure)

With such a configuration, for example, when the shaft portion 31B of the bolt 31 receives a load in an inclination direction by receiving the load using the reinforcing fiber bundle containing composite material 51 itself, it is possible to release the load received by the opening edge of the bolt hole 15 using the fiber bundle 13 having a four-layer structure in the thickness direction M. Accordingly, it is possible to suppress the damage of the opening edge of the bolt hole 15 on the side of each of the surfaces 14a, 53a, and 53b on the contact side of the reinforcing fiber bundle containing composite material 10 and the reinforcing fiber bundle containing composite material 51.

Further, in the second embodiment, although a case in which one reinforcing fiber bundle containing composite material 51 (see FIG. 9) is provided between two reinforcing fiber bundle containing composite materials 10 has been described as an example, a plurality of the reinforcing fiber bundle containing composite materials 51 may be disposed between two reinforcing fiber bundle containing composite materials 10.

Additionally, in the embodiment, a case in which the reinforcing fiber bundle containing composite material 10 with the fiber reinforced resin sheet 14A having the fiber bundle 13 provided only inside the surface 14a (one surface) is used as two reinforcing fiber bundle containing composite materials disposed in the vertical direction of the reinforcing fiber bundle containing composite material 51 has been described as an example, but the reinforcing fiber bundle containing composite material 40 (see FIG. 7) with the fiber reinforced resin sheets 14A and 14B having the fiber bundle 13 provided inside both surfaces (the surfaces 14a and 14b) may be used instead of the reinforcing fiber bundle containing composite material 10.

### <Third embodiment>

### (Configuration of reinforcing fiber bundle containing composite material)

Here, a reinforcing fiber bundle containing composite material 60 according to a third embodiment will be described with reference to FIG. 10. In FIG. 10, the same reference numerals will be given to the same components as those in the structure shown in FIG. 1. Further, F2 shown in FIG. 10 indicates a load applied to the opening edge of the bolt hole 15 and a load (hereinafter, referred to as a "load F2") applied in a direction opposite to the load F1. Since the load is applied in a direction in which the shaft portion 31B of the bolt 31 is inclined, the opening edge of the bolt hole 15 receives the load F2.

The reinforcing fiber bundle containing composite material 60 has the same configuration as the reinforcing fiber bundle containing composite material 10 except that the plurality of fiber bundles 13 provided inside the fiber reinforced resin sheet 14A constituting the reinforcing fiber bundle containing composite material 10 of the first embodiment are laminated in two stages in the thickness direction.

The plurality of fiber bundles 13 disposed at the lower stage are disposed so that the inner portion of the first portion 13A faces a direction in which the load F1 acts. The plurality of fiber bundles 13 disposed at the upper stage are disposed so that the inner portion of the first portion 13A faces a direction in which the load F2 acts.

The reinforcing fiber bundle containing composite materials 60 with such a configuration are fixed by using the bolt 31 and the nut 32 similarly to the reinforcing fiber bundle containing composite material 10 shown in FIG. 3.

### (Operations and effects of reinforcing fiber bundle containing composite material)

With such a configuration, it is possible to release the load F2 even when the load F2 acting in a direction opposite to the load F1 is applied in addition to the load F1. Accordingly, since it is possible to secure the strength in the surrounding of the bolt hole 15 located on the side of the surface 14a, it is possible to suppress the damage of the bolt hole 15 due to the load applied from the bolt.

Additionally, one obtained by rotating the fiber bundle 13 having a two-layer structure by 90° to the left side may be laminated on the plurality of fiber bundles 13 having a two-layer structure shown in FIG. 10. That is, the plurality of fiber bundles 13 having a four-layer structure may be provided inside the fiber reinforced resin sheet 14A.

With such a configuration, it is possible to secure the strength of the bolt hole 15 against the load in four directions.

Additionally, as long as the directions in which the inner portions of the laminated first portions 13A face each other are different, the facing directions are not limited to the four directions and can be appropriately selected.

Further, the number of laminations of the plurality of fiber bundles 13 is not limited two or four and can be appropriately set as long as the number is two or more.

### <Fourth embodiment>

### (Configuration of reinforcing fiber bundle containing composite material)

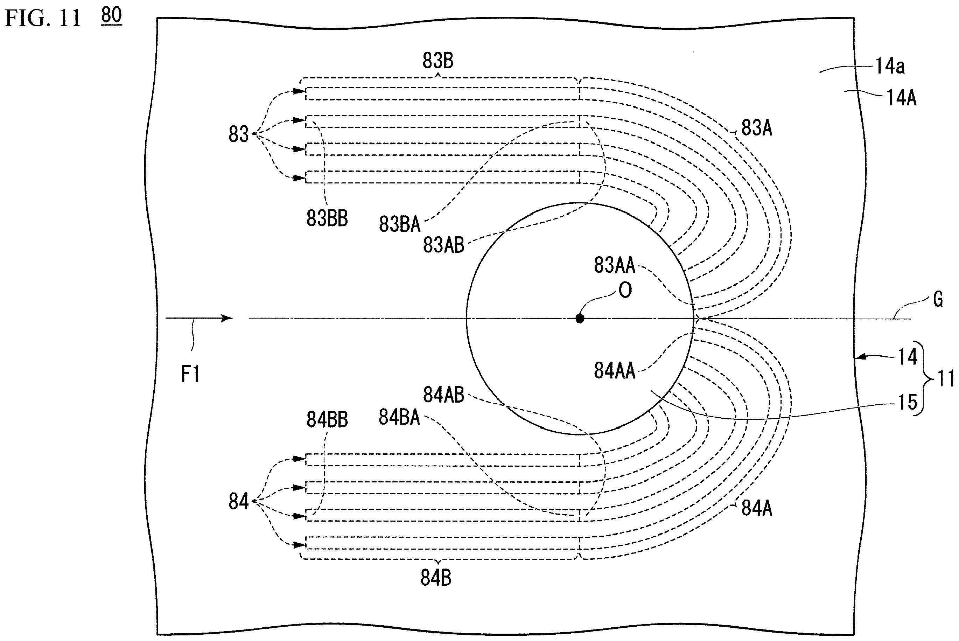

Referring to FIG. 11, a reinforcing fiber bundle containing composite material 80 of a fourth embodiment will be described. In FIG. 11, the same reference numerals will be given to the same components as those in the structure shown in FIG. 2.

The reinforcing fiber bundle containing composite material 80 has the same configuration as the reinforcing fiber bundle containing composite material 10 except that a plurality of fiber bundles 83 and 84 are provided instead of the plurality of fiber bundles 13 constituting the reinforcing fiber bundle containing composite material 10 of the first embodiment.

The fiber bundle 83 includes a first portion 83A which is oriented along the bolt hole 15 and a second portion 83B which is formed in a linear shape.

The first portion 83A includes one end 83AB and the other end 83AA. The other end 83AA may be disposed so as to face a direction in which the load F1 received by the opening edge of the bolt hole 15 acts.

The second portion 83B includes a first end 83BA and a second end 83BB. The first end 83BA is connected to one end 83AB of the first portion 83A. The second end 83BB is an end disposed on the side opposite to the first end 83BA.

The plurality of fiber bundles 83 are disposed at intervals on the outside of the bolt hole 15 in the radial direction.

The fiber bundle 84 includes a first portion 84A which is oriented along the bolt hole 15 and a second portion 84B which is formed in a linear direction.

The first portion 84A includes one end 84AB and the other end 84AA. The other end 84AA is disposed so as to face a direction in which the load F1 received by the opening edge of the bolt hole 15 acts.

The second portion 84B includes a first end 84BA and a second end 84BB. The first end 84BA is connected to one end 84AB of the first portion 84A. The second end 84BB is an end disposed on the side opposite to the first end 84BA.

The plurality of fiber bundles 84 are disposed at intervals on the outside of the bolt hole 15 in the radial direction.

The fiber bundles 83 and 84 are symmetric with respect to an imaginary line G passing through the center O of the bolt hole 15 and extending in a direction in which the load F1 acts.

The reinforcing fiber bundle containing composite materials 80 with such a configuration are fixed by using the bolt 31 and the nut 32 similarly to the reinforcing fiber bundle containing composite material 10 shown in FIG. 3.

### (Operations and effects of reinforcing fiber bundle containing composite material)

With such a configuration, when a load is applied from the shaft portion of the bolt inserted into the bolt hole 15 to the other ends 83AA and 84AA, the load transmitted by tension and compression can be released as a tensile load through the second portions 83B and 84B.

For this reason, it is possible to further improve the strength in the surrounding of the bolt hole 15 as compared with a case of using the plurality of fiber bundles 13 oriented in a U shape (see FIG. 2).

Additionally, the plurality of fiber bundles 83 and 84 or the plurality of fiber bundles 13 described above may be provided on the surface 14b of the composite material body 14.

Further, the plurality of fiber bundles 83 and 84 with the above-described configuration may be laminated in the thickness direction M so as to change the direction with respect to the bolt hole 15.

Although the preferred embodiments of the present disclosure have been described above, the present disclosure is not limited to a particular embodiment and various modifications and changes can be made within the scope of the spirit of the present disclosure described in claims.

### <Appendix>

The reinforcing fiber bundle containing composite materials 10, 40, 60, and 80 and the bolt-fastened structures 30, 45, and 50 of the embodiments are understood, for example, as below.
(1) The reinforcing fiber bundle containing composite materials 10, 40, 60, and 80 include: the composite material 11 which is formed by laminating a plurality of fiber reinforced resin sheets and has the bolt hole 15 passing through the composite material 11 in the thickness direction M; and the fiber bundles 13, 83, and 84 which are provided inside at least one of the fiber reinforced resin sheets 14A and 14B separated from each other in the thickness direction, the fiber reinforced resin sheets 14A and 14B respectively having surfaces (the surfaces 14a and 14b) of the composite material 11 disposed in the thickness direction M, wherein the fiber bundles 13, 83, and 84 include the first portions 13A, 83A, and 84A which are oriented in the circumferential direction of the bolt hole 15 and has two ends, and the second portions 13B, 13C, 83B, and 84B which include the first ends 13BA, 13CA, 83BA, and 84BA connected to at least one ends 13AA, 83AB, and 84AB in both ends and are formed in a linear shape.
   Since the fiber bundles 13, 83, and 84 with such a configuration are provided inside at least one of the fiber reinforced resin sheets 14A and 14B separated from each other, the fiber reinforced resin sheets 14A and 14B respectively having surfaces (the surfaces 14a and 14b) of the composite material 11, it is possible to receive the load transmitted through the bolt 31 disposed in the bolt hole 15 by the first portion 13A and to release the load received by the first portions 13A, 83A, and 84A through the second portions 13B, 13C, 83B, and 84B.
   In this way, since the load received by the surrounding of the bolt hole 15 is released, it is possible to reinforce the surrounding of the bolt hole 15 having a low strength.
(2) The reinforcing fiber bundle containing composite materials 10, 60, and 40 according to a second aspect are the reinforcing fiber bundle containing composite materials 10, 60, and 40 as mentioned in the item (1), wherein the shape of the fiber bundle 13 may be a U shape as viewed from the thickness direction, the fiber bundle 13 may include two second portions 13B and 13C, both ends (one end 13AA and the other end 13AB) of the first portion 13A may be respectively connected to the first ends 13BA and 13CA of the second portions 13B and 13C, and the inner portion of the first portion 13A may be disposed so as to face a direction in which the load F1 received by an opening edge of the bolt hole 15 acts.
   In this way, since the shape of the fiber bundle 13 is a U shape as viewed from the thickness direction M and the inner portion of the first portion 13A is disposed so as to face a direction in which the load F1 received by the bolt hole 15 acts, the load transmitted by bending to the first portion 13A can be converted into the tension in a direction toward the ends (the second ends 13BB and 13CB) of the second portions 13B and 13C located on the side opposite to the first ends 13BA and 13CA and then be released when the load is applied from the bolt 31 disposed in the bolt hole 15 toward the inside of the first portion 13A.
   Accordingly, it is possible to suppress a portion surrounded by the first portion 13A in the bolt hole 15 from being damaged by the load.
(3) The reinforcing fiber bundle containing composite material 80 according to a third aspect is the reinforcing fiber bundle containing composite material 80 as mentioned in the item (1), wherein the other ends 83AA and 84AA of both ends of the first portions 83A and 84A may be disposed so as to face a portion located in a direction in which the load F1 received by an opening edge of the bolt hole 15 acts.
   With such a configuration, when the other ends 83AA and 84AA of the first portions 83A and 84A receive the load F1 transmitted by tension and compression through the bolt 31 disposed in the bolt hole 15, the load can be released as the tensile load through the second portions 83B and 84B. Accordingly, it is possible to further improve the strength in the surrounding of the bolt hole 15 as compared with a case of using the fiber bundle 13 having a U shape.
(4) The reinforcing fiber bundle containing composite materials 10 and 40 according to a fourth aspect are the reinforcing fiber bundle containing composite materials 10 and 40 as mentioned in any one of the items (1) to (3), wherein the plurality of fiber bundles 13 may be disposed at intervals in a direction in which the load acts.
   With such a configuration, it is possible to improve an effect of reinforcing the surrounding of the bolt hole 15.
(5) The reinforcing fiber bundle containing composite materials 10, 40, and 80 according to a fifth aspect are the reinforcing fiber bundle containing composite materials 10, 40, and 80 as mentioned in any one of the items (1) to (4), wherein the plurality of fiber bundles 13 may be laminated in the thickness direction M while the directions with respect to the bolt hole 15 are changed.
   With such a configuration, since it is possible to release the load received from many directions, it is possible to protect the bolt hole 15 from the load received from many directions through the bolt 31.
(6) The reinforcing fiber bundle containing composite material 60 according to a sixth aspect is the reinforcing fiber bundle containing composite material 60 as mentioned in any one of the items (1) to (5), wherein the fiber reinforced resin sheet 14A having the fiber bundle 13 provided therein may be adhered to the other fiber reinforced resin sheet on which the fiber reinforced resin sheet 14A is laminated.
   In this way, the fiber reinforced resin sheet 14A having the fiber bundle 13 provided therein may be adhered to the other fiber reinforced resin sheet on which the fiber reinforced resin sheet is laminated.
(7) The bolt-fastened structures 30 and 45 according to a seventh aspect include: a first reinforcing fiber bundle containing composite materials 10 and 40 as mentioned in any one of the items (1) to (6); the second reinforcing fiber bundle containing composite materials 10 and 40 as mentioned in any one of the items (1) to (6); the bolt 31; and the nut 32 which is attached to the bolt 31, wherein the first and second reinforcing fiber bundle containing composite materials may be stacked so that their bolt holes 15 are aligned with each other in the thickness direction M and the fiber bundles 13 including the first and second reinforcing fiber bundle containing composite materials are laid beside each other, and wherein the bolt 31 may be disposed so as to pass through the bolt holes 15 in the first and second reinforcing fiber bundle containing composite materials.
   According to the bolt-fastened structures 30 and 45 with such a configuration, it is possible to release the load F1 received from the intermediate portion of the bolt 31 by the fiber bundle 13. Accordingly, it is possible to suppress the surrounding of the bolt hole 15 from being damaged.
(8) The bolt-fastened structure 50 according to an eighth aspect includes: a first reinforcing fiber bundle containing composite material 10 as mentioned in any one of the items (1) to (6); a second reinforcing fiber bundle containing composite material 10 as mentioned in any one of the items (1) to (6); a third reinforcing fiber bundle containing composite material 51 as mentioned in any one of the items (1) to (6); the bolt 31; and the nut 32 which is attached to the bolt 31, wherein, in the third reinforcing fiber bundle containing composite material, the fiber bundles 13 may be provided inside the fiber reinforced resin sheets 14A and 14B separated from each other in the thickness direction M, the fiber reinforced resin sheets 14A and 14B respectively having surfaces (the surfaces 14a and 14b) of the composite material 11 disposed in the thickness direction M, wherein the third reinforcing fiber bundle containing composite material may be disposed between the first reinforcing fiber bundle containing composite material 10 and the second reinforcing fiber bundle containing composite material 10 so that the bolt hole 15 of the third reinforcing fiber bundle containing composite material is aligned with the bolt holes 15 of the first and second reinforcing fiber bundle containing composite materials 10 in the thickness direction M, wherein the fiber bundles 13 of the first and second reinforcing fiber bundle containing composite materials 10 may be disposed so as to be laid beside the fiber bundle 13 of the third reinforcing fiber bundle containing composite material, and wherein the bolt 31 may be disposed so as to pass through the bolt holes 15 of the first to third reinforcing fiber bundle containing composite materials 10 to 51.

In this way, even when the first to third reinforcing fiber bundle containing composite materials 10 to 51 are fixed by the bolt 31 and the nut 32, it is possible to release a load received from the bolt 31 by the plurality of fiber bundles 13. Accordingly, it is possible to suppress the bolt holes 15 of the first to third reinforcing fiber bundle containing composite materials 10 to 51 from being damaged.

### EXPLANATION OF REFERENCES

10, 40, 51, 60, 80 REINFORCING FIBER BUNDLE CONTAINING COMPOSITE MATERIAL
11, 52 COMPOSITE MATERIAL
13, 83, 84 FIBER BUNDLE
13A, 83A, 84A FIRST PORTION
13AA, 83AB, 84AB ONE END
13AB, 83AA, 84AA OTHER END
13B, 13C, 83B, 84B SECOND PORTION
13BA, 13CA, 83BA, 84BA FIRST END
13BB, 13CB, 83BB, 84BB SECOND END
14, 53 COMPOSITE MATERIAL BODY
14a, 14b, 53a, 53b SURFACE
14A, 14B FIBER REINFORCED RESIN SHEET
15 BOLT HOLE
30, 45, 50 BOLT-FASTENED STRUCTURE
31 BOLT
31A HEAD PORTION
31B SHAFT PORTION
32 NUT
F1, F2 LOAD
G IMAGINARY LINE
M THICKNESS DIRECTION
O CENTER

## Claims

1. A reinforcing fiber bundle containing composite material comprising:
a composite material which is formed by laminating a plurality of fiber reinforced resin sheets and has a bolt hole passing through the composite material in a thickness direction thereof; and
a fiber bundle which is provided inside at least one of the fiber reinforced resin sheets separated from each other in the thickness direction, the fiber reinforced resin sheets respectively having surfaces of the composite material disposed in the thickness direction,
wherein the fiber bundle includes a first portion which is oriented in a circumferential direction of the bolt hole and has two ends, and a second portion which has a first end connected to at least one end of these two ends and is formed in a linear shape.

2. The reinforcing fiber bundle containing composite material according to claim 1,
wherein a shape of the fiber bundle is a U shape as viewed from the thickness direction,
wherein the fiber bundle includes two second portions, and
wherein each of both ends of the first portion is connected to the first ends of the second portions and an inner portion of the first portion is disposed so as to face a direction in which a load received by an opening edge of the bolt hole acts.

3. The reinforcing fiber bundle containing composite material according to claim 1,
wherein the other end of both ends of the first portion is disposed so as to face a portion of the bolt hole located in a direction in which a load received by an opening edge of the bolt hole acts.

4. The reinforcing fiber bundle containing composite material according to any one of claims 1 to 3,
wherein a plurality of the fiber bundles are disposed at intervals.

5. The reinforcing fiber bundle containing composite material according to any one of claims 1 to 4,
wherein a plurality of the fiber bundles are disposed so as to be laminated in the thickness direction while their directions with respect to the bolt hole are changed.

6. The reinforcing fiber bundle containing composite material according to any one of claims 1 to 5,
wherein the fiber reinforced resin sheet having the fiber bundle provided therein is adhered to the other fiber reinforced resin sheet on which the fiber reinforced resin sheet is laminated.

7. A bolt-fastened structure comprising:
first and second reinforcing fiber bundle containing composite materials according to any one of claims 1 to 6;
a bolt; and
a nut which is attached to the bolt,
wherein the first and second reinforcing fiber bundle containing composite materials are stacked so that their bolt holes are aligned with each other in the thickness direction and the fiber bundles including the first and second reinforcing fiber bundle containing composite materials are laid beside each other, and
wherein the bolt is disposed so as to pass through the bolt hole of the first and second reinforcing fiber bundle containing composite material.

8. A bolt-fastened structure comprising:
first, second and third reinforcing fiber bundle containing composite materials according to any one of claims 1 to 6;
a bolt; and
a nut which is attached to the bolt,
wherein, in the third reinforcing fiber bundle containing composite material, the fiber bundles are provided inside the fiber reinforced resin sheets separated from each other in the thickness direction, the fiber reinforced resin sheets respectively having surfaces of the composite material disposed in the thickness direction,
wherein the third reinforcing fiber bundle containing composite material is disposed between the first reinforcing fiber bundle containing composite material and the second reinforcing fiber bundle containing composite material so that the bolt hole of the third reinforcing fiber bundle containing composite material is aligned with the bolt holes of the first and second reinforcing fiber bundle containing composite materials in the thickness direction,
wherein the fiber bundles of the first and second reinforcing fiber bundle containing composite materials are disposed so as to be laid beside the fiber bundle of the third reinforcing fiber bundle containing composite material, and
wherein the bolt is disposed so as to pass through the bolt holes of the first to third reinforcing fiber bundle containing composite materials.
